(19) Europäisches Patentamt / European Patent Office / Office européen des brevets

(11) **EP 4 729 949 A1**

(12) **DEMANDE DE BREVET EUROPEEN**

(43) Date de publication:
**22.04.2026 Bulletin 2026/17**

(21) Numéro de dépôt: **25209061.8**

(22) Date de dépôt: **16.10.2025**

(51) Classification Internationale des Brevets (IPC):
**G01P 3/68** *(2006.01)*     **G01P 21/02** *(2006.01)*
**G01S 7/481** *(2006.01)*     **G01S 7/497** *(2006.01)*
**G01S 17/58** *(2006.01)*

(52) Classification Coopérative des Brevets (CPC):
**G01P 21/02; G01P 3/68; G01S 7/4818;**
**G01S 7/497; G01S 17/58**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **18.10.2024 FR 2411358**

(71) Demandeur: **Commissariat à l'Energie Atomique et aux Energies Alternatives**
**75015 Paris (FR)**

(72) Inventeurs:
• **ALFILLE, Jean-Pascal**
  **91590 LA FERTE ALAIS (FR)**
• **AZZOLINA, Aurélie**
  **91700 SAINTE GENEVIEVE DES BOIS (FR)**
• **BENIER, Jacky**
  **91630 Avrainville (FR)**
• **DESSEROUER, Frédéric**
  **91470 Les Molières (FR)**

(74) Mandataire: **Atout PI Laplace**
**Immeuble Up On**
**25 Boulevard Romain Rolland**
**CS 40072**
**75685 Paris Cedex 14 (FR)**

(54) **DISPOSITIF D'ETALONNAGE POUR VELOCIMETRE LASER**

(57) L'invention concerne un dispositif d'étalonnage (10) destiné à être couplé à un vélocimètre laser (VL) comprenant:
• un disque (D)
• un miroir (M) solidaire du disque,
• un premier dispositif d'illumination/réception (DIR1) configuré pour
• recevoir un premier signal lumineux (S1) à une première fréquence,
• orienter et focaliser le premier signal lumineux de manière à former un premier signal incident éclairant la surface du miroir à une incidence normale pour une position du disque lors d'un passage du disque, et selon un diamètre sur ladite surface déterminé,
• récupérer un premier signal réfléchi (SR1) par le miroir à une fréquence décalée par rapport à la première fréquence d'un décalage Doppler ($\Delta f$),

• ledit dispositif d'étalonnage étant en outre configuré pour fournir en sortie, au moins une fraction dudit premier signal réfléchi et une valeur d'une première vitesse tangentielle étalon (vte1) déterminée à partir de ladite vitesse angulaire ($\omega$) et dudit rayon de mesure (Rm), destinées audit vélocimètre laser (VL) à étalonner.

FIG.1

**Description**

**DOMAINE DE L'INVENTION**

La présente invention concerne le domaine des appareils de métrologie, et plus spécifiquement des appareils basés sur la vélocimétrie laser, dénommés vélocimètre laser. Un vélocimètre laser est un instrument à base de laser permettant de mesurer la vitesse d'un objet en mouvement (translation, rotation, phénomènes vibratoires...) éclairée par le laser, en utilisant l'effet Doppler. L'invention concerne plus particulièrement les dispositifs permettant d'étalonner en vitesse les vélocimètres laser.

**ETAT DE LA TECHNIQUE**

Lorsque la vitesse d'un objet est modérée, jusqu'à environ une centaine de mètres par seconde, et si la distance parcourue par cet objet est facilement accessible via des détecteurs, une simple mesure de temps entre deux points de mesure peut suffire à déterminer avec une bonne précision la vitesse moyenne de l'objet.

Il n'y a donc pas de réel problème technique de calcul de la vitesse de l'objet puisque les deux grandeurs de base, la distance parcourue et le temps de vol, sont tous deux mesurables. De plus, si les deux grandeurs distance et temps sont mesurées avec précision, la vitesse moyenne de l'objet déduite peut être connue également avec une grande précision

Les deux principaux moyens de mesure de grandes vitesses d'objets sont les suivants :

- Les caméras rapides : d'un point de vue historique, les premiers dispositifs sont les caméras optiques rapides. Elles peuvent enregistrer à une cadence très élevée (typiquement $4.10^6$ images/s) une succession d'une centaine d'images pendant des temps courts (typiquement 20 $\mu$s). De mise en œuvre délicate, ces techniques nécessitent que l'objet en mouvement soit visible par la caméra, ce qui n'est pas toujours le cas. Dans la pratique, le temps de défilement entre chaque image étant connue, la vitesse de l'objet est connue grâce à l'évolution de la position de l'objet sur chaque image. Notons que les technologies des caméras rapides sont peu utilisées car particulièrement coûteuses (environ 300 k € à 1 M €) pour une voie de mesure.

- La Vélocimétrie laser : le second moyen de mesure de vitesse couramment mis en œuvre est la vélocimétrie laser et notamment la Vélocimétrie Hétérodyne (VH). Cette dernière est très attractive car elle permet une mesure dans des conditions difficiles, par exemple lorsque l'objet n'est accessible, ni à l'instrumentation de chronométrie, ni à l'observation déportée. En effet, les sondes optiques de mesure de vitesse ont de petites dimensions (de l'ordre du mm de diamètre et de 10 mm de longueur), facilement intégrables dans une expérience. L'information de la vitesse est transférée de la sonde vers la baie d'acquisition de l'instrument de mesure via une fibre optique monomode de très petite section. Les applications sont nombreuses dans l'industrie et la recherche grâce à une mise en œuvre aisée pour un coût modéré du système de mesure par Vélocimétrie laser Hétérodyne (environ 25 k€ pour une voie de mesure).

De manière connue un vélocimètre laser comprend typiquement un dispositif d'émission/réception configuré pour émettre un signal lumineux à une fréquence connue et pour recevoir un signal réfléchi par l'objet en mouvement, et un module de mesure configuré pour d'une part superposer un signal référence à la fréquence connue et le signal réfléchi, et d'autre part détecter le signal de battement issu de l'interférence des deux signaux, présentant une fréquence de battement du fait de l'effet Doppler, dénommé fréquence Doppler. Le vélocimètre comprend également une unité de traitement configurée pour numériser le signal de battement et extraire de cette fréquence Doppler une information de vitesse de l'objet.

La vitesse est déterminée en appliquant la formule connue:

$$v_{obj} = \lambda.fd/2$$

avec $v_{obj}$ vitesse de l'objet, $\lambda$ longueur d'onde d'illumination du laser et fd fréquence Doppler.

On peut citer le dispositif d'étalonnage d'un vélocimètre laser Doppler (LVC) décrit dans la publication « Simple and accurate calibration system for Laser Doppler de Terre et al, International Journal of light and Electron Optics 179 (2019) utilisant un disque rotatif de type hacheur optique ou « chopper » pour l'étalonnage de vitesse allant jusqu'à 30 m/s (1914 m/min). Le disque simule la vitesse d'un objet avec une vitesse de référence vref égale à r$\omega$, r rayon du disque et $\omega$ vitesse angulaire, connue avec précision et mesurée à l'aide d'un laser dédié, dont le faisceau traverse le « chopper » à sa périphérie, et d'un détecteur. Le vélocimètre éclaire également le disque rotatif sur sa tranche et réalise une mesure de sa vitesse, qui est comparée à vref.

De manière générale les vitesses atteintes par les disques en rotation sont limitées à environ 20-30 m/s. Il n'existe à ce jour pas de dispositif d'étalonnage simple de mise en œuvre pour mettre en mouvement un objet dans une large gamme de vitesse jusqu'à 5000 m/s.

Un but de la présente invention est de remédier aux inconvénients précités en proposant un dispositif d'étalonnage permettant de générer des vitesses étalon stabilisées dans la gamme 1 - 5000m/s, et que l'on peut déployer aisément, sans contraintes spécifiques.

## DESCRIPTION DE L'INVENTION

Selon un premier aspect l'invention concenren un dispositif d'étalonnage destiné à être couplé à un vélocimètre laser comprenant :

- un disque configuré pour tourner autour d'un axe de rotation à une vitesse angulaire déterminée,

- un miroir (M) solidaire du disque, présentant une surface,

- un premier dispositif d'illumination/réception configuré pour :

  - recevoir un premier signal lumineux à une première fréquence, ledit premier signal lumineux étant issu du vélocimètre laser,

  - orienter et focaliser le premier signal lumineux de manière à former un premier signal incident éclairant la surface du miroir à une incidence normale pour une position du disque lors d'un passage du disque, et selon un diamètre sur ladite surface déterminé, le centre dudit diamètre étant localisé à une distance de mesure déterminée dudit axe de rotation,

  - récupérer un premier signal réfléchi par le miroir à une fréquence décalée par rapport à la première fréquence d'un décalage Doppler,

ledit dispositif d'étalonnage étant en outre configuré pour fournir en sortie, au moins une fraction dudit premier signal réfléchi et une valeur d'une première vitesse tangentielle étalon déterminée à partir de ladite vitesse angulaire et dudit rayon de mesure, destinées audit vélocimètre laser à étalonner.

Selon une variante le dispositif d'étalonnage comprend en outre un dispositif de réinjection configuré pour récupérer, amplifier et réinjecter, dans le premier dispositif d'illumination/réception, le premier signal réfléchi et une pluralité de signaux réfléchis additionnels formés par des réflexions successives sur ledit miroir lors dudit passage du disque. Le dispositif d'étalonnage est en outre configuré pour fournir en sortie une fraction de ladite pluralité de signaux réfléchis additionnels, destinés audit vélocimètre laser à étalonner.

Selon un mode de réalisation le premier dispositif d'illumination/réception est fibré et dans lequel le dispositif de réinjection comprend un premier coupleur, un premier amplificateur optique et une fibre optique miroir.

Selon un autre mode de réalisationle premier dispositif d'illumination/réception est fibré et dans lequel le dispositif de réinjection comprend un deuxième coupleur et un deuxième amplificateur optique configuré pour reboucler sur le deuxième coupleur.

Selon un mode de réalisation le disque comprend des motifs traversant disposés régulièrement en périphérie du disque sur un rayon déterminé, le dispositif d'étalonnage comprenant en outre un deuxième dispositif d'illumination/réception configuré pour :

- recevoir un deuxième signal lumineux à une deuxième fréquence, ledit deuxième signal lumineux étant issu du vélocimètre laser,
- orienter et focaliser le deuxième signal lumineux de manière à former un deuxième signal incident éclairant, avec un angle d'incidence ($\alpha$) non nul par rapport au plan du disque, soit les motifs soit la surface du disque en fonction de la position du disque lors de la rotation,
- récupérer un deuxième signal rétrodiffusé par le disque, présentant une alternance entre un deuxième signal d'amplitude non nulle issu de la rétrodiffusion de la surface du disque, et un deuxième signal d'amplitude nulle lorsque le deuxième signal incident traverse le disque au travers d'un motif,

ledit dispositif d'étalonnage étant en outre configuré pour fournir audit vélocimètre laser, au moins une fraction dudit deuxième signal rétrodiffusé.

Selon un mode de réalisation le dispositif d'étalonnage est destiné à être en outre couplé à un télémètre laser, le disque comprenant alors des motifs traversant disposés régulièrement en périphérie du disque sur un rayon déterminé, le dispositif d'étalonnage comprenant en outre :

- un objet rétrodiffusant disposé sous le disque à une distance déterminée du disque et de manière à rétrodiffuser une lumière ayant traversé les motifs,
- un troisième dispositif d'illumination/réception configuré pour :

  o recevoir un troisième signal lumineux à une troisième fréquence, ledit troisième signal lumineux étant issu du télémètre laser,
  o orienter et focaliser le troisième signal lumineux de manière à former un troisième signal incident éclairant, selon un axe d'incidence normal à la surface du disque, soit les motifs traversant soit la surface du disque en fonction de la position du disque lors de la rotation,
  o récupérer un troisième signal rétrodiffusé (SR3') présentant une alternance entre un troisième signal rétrodiffusé par le disque et un troisième signal rétrodiffusé par l'objet,

ledit dispositif d'étalonnage étant en outre configuré pour fournir audit télémètre laser (TL), au moins une fraction dudit troisième signal rétrodiffusé.

Selon un mode de réalisation l'objet est configuré pour être positionné à une pluralité de distances déterminées le long dudit axe d'incidence du troisième signal incident.

Selon un mode de réalisation le dispositif d'étalonnage comprend en outre une masse d'équilibrage disposée sur le disque et destinée à équilibrer une masse du miroir.

Selon un mode de réalisation le disque présente, au moins en périphérie, une épaisseur diminuant avec une distance à l'axe de rotation.

Selon un mode de réalisation les motifs traversant sont des créneaux localisés en périphérie du disque.

Selon un mode de réalisation le disque est bi-matériaux, avec un premier matériau pour une partie centrale du disque et un deuxième matériau pour une partie périphérique.

Selon un mode de réalisation le Ddispositif d'étalonnage est configuré de sorte qu'une première vitesse tangentielle étalon maximale atteinte par le disque soit supérieure ou égale à 100 m.s$^{-1}$.

Selon un autre aspect l'invention concerne un système de mesure de vitesse étalonné comprenant un vélocimètre laser et un dispositif d'étalonnage selon le premier aspect de l'invention, le vélocimètre laser étant configuré pour être couplé audit dispositif d'étalonnage lors de l'étalonnage, le vélocimètre laser comprenant :

- un dispositif d'émission/réception configuré pour émettre le premier signal lumineux à ladite première fréquence et pour recevoir un signal réfléchi par une cible décalé en fréquence,
- un module de mesure configuré pour superposer un signal référence et ledit signal réfléchi par la cible, et détecter un signal de battement à une fréquence de battement correspondant au décalage en fréquence,
- une unité de traitement configurée pour numériser le signal de battement et extraire de la fréquence de battement une information de vitesse.

Le vélocimètre laser est en outre configuré, lors de l'étalonnage, pour recevoir ladite valeur d'une première vitesse tangentielle étalon délivrée par le dispositif d'étalonnage et de sorte que :

- le dispositif d'émission/réception émette ledit le premier signal lumineux à ladite première fréquence vers le dispositif d'étalonnage,
- le dispositif d'émission/réception reçoive, du dispositif d'étalonnage, la fraction dudit premier signal réfléchi présentant une fréquence décalée de la première fréquence d'un décalage Doppler correspondant à ladite première vitesse tangentielle étalon, et
  la fraction de la pluralité de signaux réfléchis additionnels présentant respectivement une fréquence décalée de la première fréquence d'une pluralité de décalages égaux à i fois le décalage Doppler, i variant de 2 à n,
- l'unité de traitement extraie dudit décalage Doppler une première vitesse tangentielle de mesure à comparer avec la première vitesse tangentielle étalon, et extraie, de ladite pluralité de décalages égaux à i fois le décalage Doppler, une pluralité de vitesse de mesure tangentielles additionnelles associées, à comparer respectivement à une pluralité de vitesses tangentielles étalon additionnelles respectivement égales à i fois la première vitesse tangentielle étalon.

La description suivante présente plusieurs exemples de réalisation du dispositif de l'invention: ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :

La figure 1 illustre un dispositif d'étalonnage selon l'invention.

La figure 2 illustre un exemple d'implémentation du dispositif d'étalonnage selon l'invention.

La figure 3 illustre une variante du dispositif d'étalonnage selon l'invention adaptée pour l'étalonnage de grandes vitesses et comprenant un dispositif de réinjection.

La figure 4 illustre un premier mode de réalisation de la variante à dispositif de réinjection dans lequel le dispositif de réinjection comprend un premier coupleur, un premier amplificateur optique et une fibre optique miroir.

La figure 5 illustre un spectrogramme temps/vitesse d'un exemple de la multiplication des vitesses selon le premier mode de réalisation de la variante à dispositif de réinjection.

La figure 6 illustre un deuxième mode de réalisation de la variante à dispositif de réinjection dans lequel le dispositif de réinjection comprend un deuxième coupleur et un deuxième amplificateur optique configuré pour reboucler sur le deuxième coupleur.

La figure 7 illustre un spectrogramme temps/vitesse d'un exemple de la multiplication des vitesses selon le deuxième mode de réalisation de la variante à dispositif de réinjection, pour le cas d'une vitesse obtenue sans boucle.

La figure 8 illustre un spectrogramme temps/vitesse d'un exemple de la multiplication des vitesses selon le deuxième mode de réalisation de la variante à dispositif de réinjection, pour le cas de vitesses obtenues avec la boucle, mais sans l'amplificateur.

La figure 9 illustre un spectrogramme temps/vitesse d'un exemple de la multiplication des vitesses selon le deuxième mode de réalisation de la variante à dispositif de réinjection, pour le cas de vitesses obtenues avec la boucle et l'amplificateur en fonctionnement.

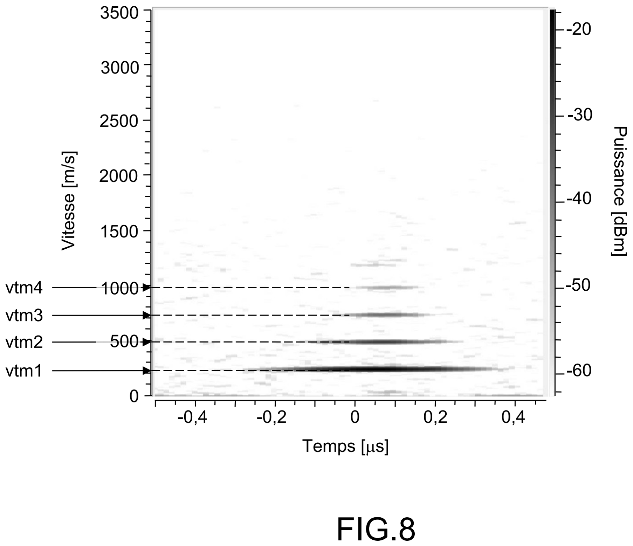

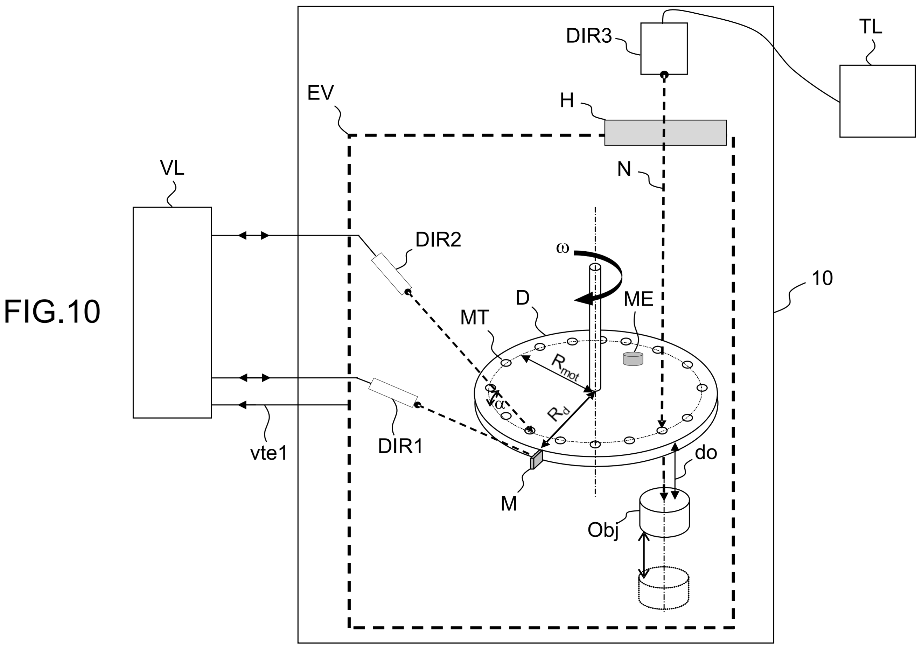

La figure 10 illustre une variante du dispositif d'étalonnage selon l'invention dans laquelle celui-ci est également configuré pour générer des transitions de vitesse périodiques et rapides, et comprend pour cela des motifs traversant. La figure 8 illustre également une variante du dispositif d'étalonnage selon l'invention dans laquelle celui-ci est destiné à être couplé à un télémètre laser TL, afin de permettre à celui-ci de s'étalonner en distance. Pour cela le disque comprend un objet rétrodiffusant disposé sous le disque. La figure 8 illustre également une variante du dispositif d'étalonnage selon l'invention dans laquelle le disque rotatif est disposé dans une enceinte de confinement sous vide.

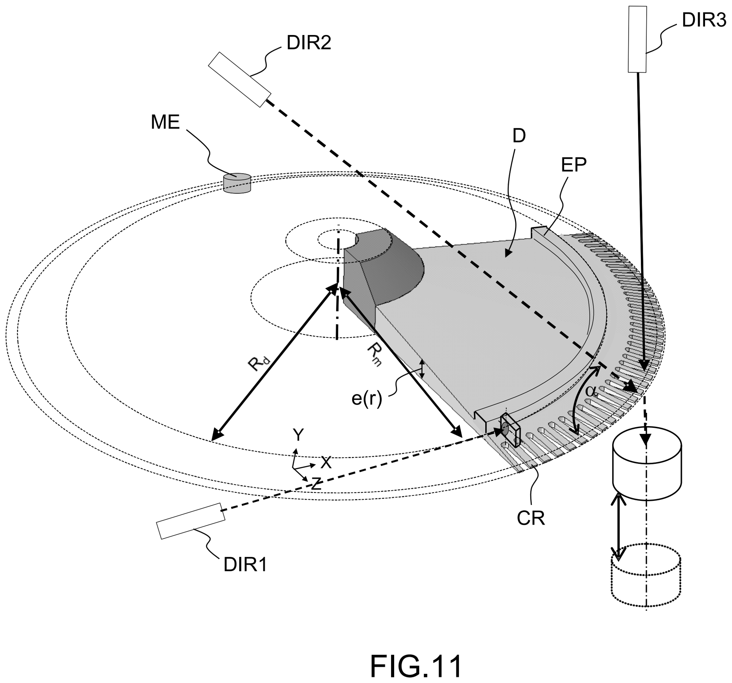

La figure 11 illustre un disque rotatif optimisé pour le dispositif d'étalonnage selon l'invention présentant une épaisseur évolutive, plus épaisse au centre qu'au bord, qui est bi-matériau et dont les motifs traversant sont des créneaux localisés en périphérie du disque.

La figure 12 illustre un système de mesure de vitesse étalonné selon un deuxième aspect de l'invention.

## DESCRIPTION DETAILLEE DE L'INVENTION

L'idée de base de l'invention est d'utiliser comme dispositif d'étalonnage un disque rotatif de métrologie simulant le mouvement d'un objet. Le dispositif d'étalonnage 10 selon un premier aspect de l'invention est ainsi un générateur étalon de vitesse d'un objet. Il est destiné à être couplé à un système de mesure industriel de type vélocimètre laser VL, par exemple un vélocimètre laser hétérodyne (VLH), afin de vérifier l'exactitude des vitesses restituées par celui-ci. En d'autres termes il s'agit de vérifier si le système industriel de mesure VL est bien étalonné dans toute sa gamme de mesure.

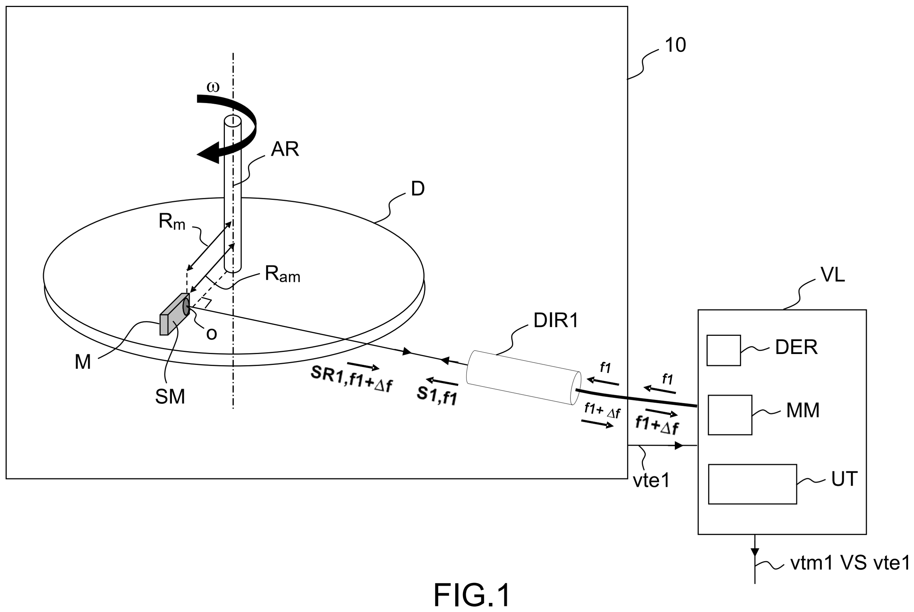

Le dispositif d'étalonnage 10 selon l'invention est illustré figure 1. Il est destiné à être couplé à un vélocimètre laser VL également représenté sur la figure 1 mais ne faisant pas partie de l'invention selon un premier aspect.

Pour mémoire de manière connue un vélocimètre laser VL comprend un dispositif d'émission/réception DER configuré pour émettre un signal lumineux à une première fréquence f1 et pour recevoir un signal réfléchi par un objet à caractériser décalé en fréquence. Il comprend également un module de mesure MM configuré pour superposer un signal référence et le signal réfléchi, et détecter un signal de battement à une fréquence de battement correspondant au décalage en fréquence entre le signal de référence (à la fréquence f1) et le signal réfléchi, décalé en fréquence d'un décalage issu de l'effet Doppler. Le vélocimètre VL comprend enfin une unité de traitement UT configurée pour numériser le signal de battement et extraire de la fréquence de battement une information de vitesse de l'objet.

La dispositif d'étalonnage 10 est réalisé indépendamment du vélocimètre VL, et est couplé à VL lorsque l'on souhaite l'étalonner.

Le dispositif d'étalonnage 10 selon l'invention comprend un disque D configuré pour tourner autour d'un axe de rotation AR à une vitesse angulaire $\omega$ déterminée, c'est-à-dire connue, avec précision. La mesure précise de la vitesse de rotation du disque est par exemple obtenue à partir d'une référence électronique (horloge) issue de la commande du moteur électrique entrainant le disque en rotation. Selon un autre exemple un dispositif optique de comptage de tours mesurant la fréquence de rotation f du disque est intégré dans le dispositif d'étalonnage selon l'invention, et la vitesse angulaire est déterminée par la relation $\omega = 2.\pi.f$.

Le dispositif d'étalonnage comprend également un miroir M solidaire du disque, présentant une surface SM. Le miroir est préférentiellement placé en périphérie du disque pour que sa vitesse tangentielle soit la plus élevée possible compte tenu de la vitesse de rotation $\omega$.

Le dispositif d'étalonnage comprend également un premier dispositif d'illumination/réception DIR1 configuré pour recevoir un premier signal lumineux S1 à une première fréquence, le premier signal lumineux S1 étant issu du vélocimètre laser. Le vélocimètre laser présente typiquement une sortie fibrée ou en espace libre. Le dispositif DIR1 est préférentiellement (mais non nécessairement) fibré. Lorsque VL et DIR1 sont tous deux fibrés, un coupleur permet de joindre les deux fibres.

Le dispositif DIR1 est également configuré pour orienter et focaliser le premier signal lumineux de manière à former un premier signal incident éclairant la surface du miroir SM à une incidence normale pour une position du disque donnée lors d'un passage du disque rotatif. Le faisceau incident présente sur la surface SM un diamètre Dsp (rayon Rsp) et la position du centre O du diamètre du faisceau incident sur le miroir par rapport à l'axe de rotation est connue avec précision, cette distance étant dénommée Rm. Typiquement le diamètre du faisceau Dsp est de l'ordre 10-100 $\mu$m. Par exemple on connait la distance Roe entre le point O et l'extrémité du miroir côté axe de rotation et la distance Ram entre l'extrémité du miroir côté axe de rotation et l'axe de rotation AR. Le centre O du diamètre du faisceau incident sur le miroir est ainsi localisé à la distance de mesure Rm de l'axe de rotation AR connue avec précision, égale par exemple à:

$$Rm = Ram+Rsp.$$

La vitesse tangentielle du miroir au point O, dénommée première vitesse tangentielle étalon vte1, est donc connue avec précision avec la formule :

$$vte1 = \omega.Rm$$

Préférentiellement la surface du miroir est parallèle à un rayon du disque mais ce n'est pas obligatoire. Ce qu'il faut c'est que le miroir soit réglé en auto-collimation par rapport au faisceau incident, c'est-à-dire de manière à renvoyer la lumière réfléchie sur le même trajet qu'à l'aller. Compte tenu de la vitesse de rotation du disque, le miroir ne reste en auto-collimation lors d'un passage qu'un court instant, typiquement de l'ordre de la $\mu$s.

Le dispositif DIR1 est configuré pour récupérer un premier signal réfléchi SR1 par le miroir à une fréquence décalée par rapport à la première fréquence f1 d'un décalage Doppler $\Delta f$ provenant de la vitesse tangentielle du miroir au point O. Ainsi lors de la rotation du disque et lorsque le miroir est, pendant un bref instant, perpendiculaire au faisceau incident de fréquence f1, le faisceau retour réfléchi par le miroir est décalé en fréquence par effet Doppler (fréquence f1+$\Delta f$) correspondant à la vitesse tangentielle du miroir en mouvement de rotation. Le faisceau réfléchi contenant l'information [f1+$\Delta f$] retourne dans le dispositif DIR1 également dénommé sonde.

Le dispositif d'étalonnage 10 est en outre configuré pour fournir, en sortie de dispositif :

- d'une part la valeur de première vitesse tangentielle étalon vte1, déterminée à partir de la vitesse angulaire $\omega$ et dudit rayon de mesure Rm, tous deux connus avec précision ;

- d'autre part au moins une fraction du premier signal réfléchi SR1 à la fréquence f1+$\Delta f$, porteur d'une information en fréquence $\Delta f$ associée à la première vitesse tangentielle étalon vte1 connue par ailleurs.

Ces données de sortie sont destinées à être fournies au vélocimètre laser VL à étalonner.

Ainsi le dispositif selon l'invention constitue un générateur de vitesses tangentielles étalons dans la gamme de 1 à 500 m/s d'un objet (le disque en rotation).

La première vitesse étalon vte1 peut atteindre, avec une structure optimisée du disque en rotation à sa vitesse angulaire maximale, une valeur maximum d'environ 500 m/s. Grâce contrôle de la vitesse angulaire de rotation du disque $\omega$, la vitesse tangentielle en périphérie du disque peut varier dans une large plage, typiquement [1 ; 500 m/s].

Le dispositif d'étalonnage selon l'invention peut être déployé dans tous les locaux, et ce sans infrastructure particulière ni contrainte de sécurité. Typiquement le dispositif 10 est entièrement capoté.

A noter que la première vitesse tangentielle vte1 du disque générée est connue avec une bonne précision, d'environ $\Delta vte1/vte1$ de l'ordre de $10^{-4}$.

Ceci est rendu possible grâce à la connaissance précise de :

- la vitesse angulaire du disque ($\omega$), mesurée en instantanée au moment de chaque étalonnage,

- la valeur du rayon Rm entre l'axe de rotation du disque et le centre O du point de mesure de la sonde focalisée.

La vitesse angulaire du disque est préférentiellement mesurée en continu afin de surveiller sa stabilité.

Lors de l'étalonnage, le vélocimètre VL est couplé au dispositif 10 selon l'invention et reçoit donc en entrée le signal SR1, mélange ce signal avec un signal référence à la fréquence f1 et détermine la fréquence de battement reliée à $\Delta f$, dont il extrait une première vitesse tangentielle de mesure vtm1. Cette vitesse mesurée vtm1 est à comparer à la première vitesse tangentielle étalon vte1 pour procéder à l'étalonnage.

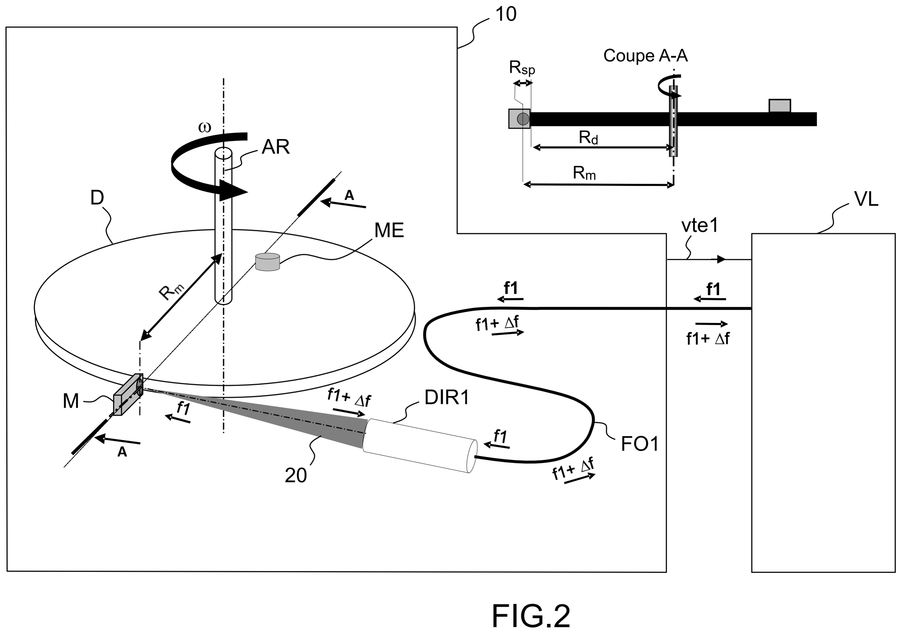

A titre non limitatif un exemple d'implémentation du dispositif d'étalonnage selon l'invention est illustré figure 2. Le premier dispositif d'illumination réception DIR1 est une sonde fibrée, c'est à dire comprenant une fibre optique FO1. L'utilisation d'une fibre optique est un mode préféré mais le transit des signaux lumineux est également possible en espace libre ou sous forme d'optique intégrée. La sonde fibrée est munie d'un dispositif de focalisation permettant la génération d'un faisceau incident focalisé 20 présentant sur le miroir M un spot diamètre Dsp de l'ordre de 10 $\mu$m. Le miroir M est fixé sur la tranche du disque, sur sa périphérie, et le dispositif est configuré pour que le faisceau 20 impacte le miroir de manière tangente à la tranche du disque (spot tangent au bord du disque). La première vitesse tangentielle étalon vte1 est alors maximum et égale à $\omega$.Rd, avec Rd rayon du disque D. Le rayon de mesure Rm est dans ce cas égal à :
Rm = Rd + Rsp, Rsp rayon du spot du faisceau sur le miroir M.

La sonde DIR1 est configurée pour récupérer le faisceau réfléchit pendant le court instant pour lequel on a l'auto-collimation, ce faisceau réfléchit repartant via la fibre OF1. La fibre optique OF1 remplit la fonction d'un dispositif d'entrée/sortie permettant le couplage avec vélocimètre VL.

Optionnellement on fixe sur le disque une masse d'équilibrage ME pour compenser la masse du miroir ajoutée sur la tranche du disque.

La coupe selon la direction AA en haut de la figure 2 illustre la configuration particulière pour laquelle on a Rm = Rd + Rsp.

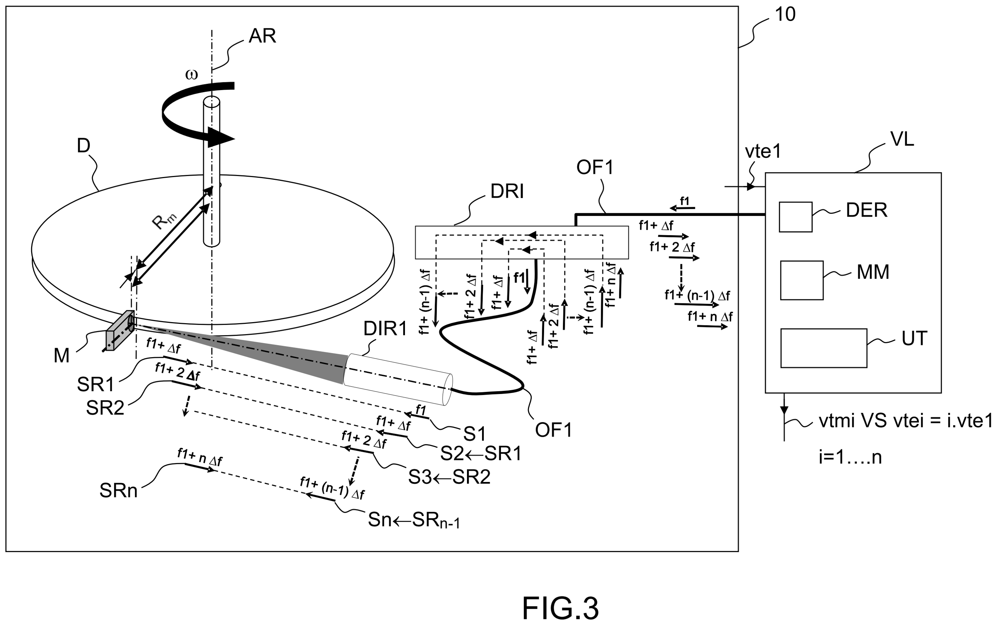

Selon une variante dénommée variante multiplicative de vitesse illustrée figure 3, qui reprend, à titre non limitatif, le mode d'implémentation de la figure 2, le dispositif d'étalonnage selon l'invention est adapté pour l'étalonnage de grandes vitesses supérieures à vte1. Pour cela le dispositif 10 comprend en outre un dispositif de réinjection DRI configuré pour récupérer, amplifier et réinjecter, dans le premier dispositif d'illumination/réception DIR1, le premier signal réfléchi SR1 et une pluralité de signaux réfléchis additionnels formés par des réflexions successives sur le miroir M pendant l'instant d'auto-collimation lors du passage du disque rotatif. On indice ces signaux réfléchis additionnels SRi, i variant de 2 à n, i =1 correspondant au premier signal réfléchit SR1 décrit ci-dessus. Le dispositif DRI est disposé en amont du dispositif DIR1, entre celui-ci et la sortie destinée à être couplée au vélocimètre.

Dans cette boucle de réinjection le signal SR1, de fréquence f1+Δf est récupéré, amplifié par le dispositif DRI et réinjecté, toujours via ce dispositif DRI, dans le premier dispositif d'illumination/réception DIR1. Il devient alors un faisceau incident S2 sur le miroir : S2 = SR1. Ce faisceau S2 est réfléchi à son tour par le miroir pour former SR2 et présente une fréquence décalée de Δf par rapport à la fréquence de S2 égale à f1+Δf, soit une fréquence f1 + 2.Δf, décalée de 2.Δf par rapport à f1. Ce faisceau SR2 est à son tour récupéré, amplifier et réinjecté dans DRI1 et devient le faisceau incident S3= SR2 et ainsi de suite jusqu'à l'obtention d'un faisceau réfléchit Sn de fréquence f1 + n.Δf. Le dispositif 10 selon l'invention génère ainsi une pluralité de n faisceaux réfléchis SRi présentant respectivement une fréquence f1+i.Δf, soit un décalage en fréquence d'une valeur de i.Δf par rapport à f1.

La limite du nombre d'itérations possibles, soit la valeur de n, est limité par l'atténuation du faisceau non compensée par l'amplification et par le temps pendant lequel il y a une auto-collimation avec la sonde de mesure (DIR1). En effet très rapidement le faisceau réfléchi par le miroir ne revient plus sur le même trajet et n'est donc pas récupéré par DIR1. Typiquement n est compris entre 10 et 25, en fonction de la vitesse de rotation du disque.

Le dispositif d'étalonnage 10 est en outre configuré pour fournir en sortie, outre le signal SR1, une fraction de la pluralité de signaux réfléchis additionnels SRi. Ces données additionnelles de sortie sont destinées à être fournies au vélocimètre laser VL à étalonner.

Lors de l'étalonnage, le vélocimètre VL est couplé au dispositif 10 selon l'invention et reçoit donc en entrée, en plus du signal SR1et par le même canal, la pluralité de signaux additionnels SRi, qui sont superposés.

Ces signaux sont détectés et traités par le vélocimètre VL, et l'unité de traitement UT de VL extrait de la pluralité de décalages, égaux à i. Δf, une pluralité de vitesse de mesure tangentielles additionnelles associées vtmi. Ces vitesse de mesure vtmi sont, pour l'étalonnage, à comparer respectivement à une pluralité de vitesses tangentielles étalon additionnelles vtei respectivement égales à i fois la première vitesse tangentielle étalon vte1 : vtei = i.vte1.

Grâce au dispositif selon l'invention on a réussi à s'extraire des contraintes exercées sur un disque en rotation limitant sa vitesse tangentielle maximum, en générant des pseudo vitesses tangentielles étalon égales à des multiples de la vitesse tangentielle initiale vte1. En effet, les modélisations de tenue mécanique du disque montrent systématiquement une rupture du disque dans la zone centrale d'entraînement à partir d'une vitesse tangentielle d'environ 1000 m/s, et ce, avec les meilleurs matériaux métalliques du moment. Il est donc impossible d'obtenir directement des décalages Doppler (Δf) correspondant à des vitesses supérieures à 1000 m/s environ.

Pour atteindre des décalages Doppler correspondant à des vitesses tangentielles étalon de plusieurs centaines voire milliers de mètres par seconde, le dispositif selon l'invention duplique et cumule le décalage Doppler initial Δf, correspondant typiquement à la vitesse tangentielle étalon maximale réellement atteignable en bord de disque (par exemple 500 m/s).

En d'autres termes, il s'agit d'augmenter artificiellement ce décalage Doppler initial Δf en le multipliant par un facteur n permettant de générer une plage de décalages Doppler plus importante (et parfaitement connue).

Typiquement en partant d'une vitesse vte1 = 500 m/s, on peut atteindre des vitesses tangentielles étalon de 5000 à 10000 m/s.

Le dispositif de réinjection constitue un circuit optique spécifique sous la forme d'une boucle optique qui permet de multiplier de n fois le décalage Doppler initial. A titre d'exemple cette multiplication des décalages Doppler (n x Δf avec n de 10 à 20) permet typiquement d'atteindre des vitesses d'un pseudo-projectile de 5000 à 10000 m/s, en partant de vte = 500m/s.

Afin d'obtenir une bonne précision sur ces vitesses élevées, l'incertitude sur la vitesse de base vte1 doit être la plus faible possible, typiquement Δvte1/vte1 de l'ordre de $10^{-4}$ à $10^{-5}$.

L'avantage de cette variante multiplicative de vitesse du dispositif selon l'invention est de pouvoir réaliser un étalonnage de vitesse sur un objet en mouvement dans une très large gamme de vitesse, et quelques mètres à plusieurs milliers de mètres par seconde.

Dans le mode de réalisation dans lequel le dispositif DIR1 comprend une première fibre optique OF1, le dispositif DRI est couplé au dispositif DIR1 via cette fibre optique OF1. Selon un mode de réalisation également représenté figure 3 le dispositif DIR1 comprend une deuxième fibre optique OF2 remplissant la fonction d'un dispositif d'entrée/sortie permettant le couplage avec le vélocimètre VL.

Au niveau des applications selon un mode de réalisation le dispositif 10 selon l'invention est modulaire, avec un mode de base MB permettant l'étalonnage jusqu'à vte1, comprenant le disque rotatif et le dispositif DIR1 muni de la fibre OF1, et un module de multiplication de vitesse MMV intégrant le dispositif DRI muni de la fibre optique OF2, la sortie du module MMV étant couplée à OF1, que l'on ajouterait au module de base en fonction des besoins.

Le dispositif d'étalonnage selon l'invention peut fonctionner avec un signal lumineux incident à une longueur d'onde choisie, dont la valeur est comprise entre le lointain infrarouge et l'UV, incluant le visible. Une longueur d'onde de 1550 nm est couramment mise en œuvre dans les technologies fibrées en communication, et il existe donc dans le commerce des composants fibrés adaptés à la réalisation du dispositif selon l'invention.

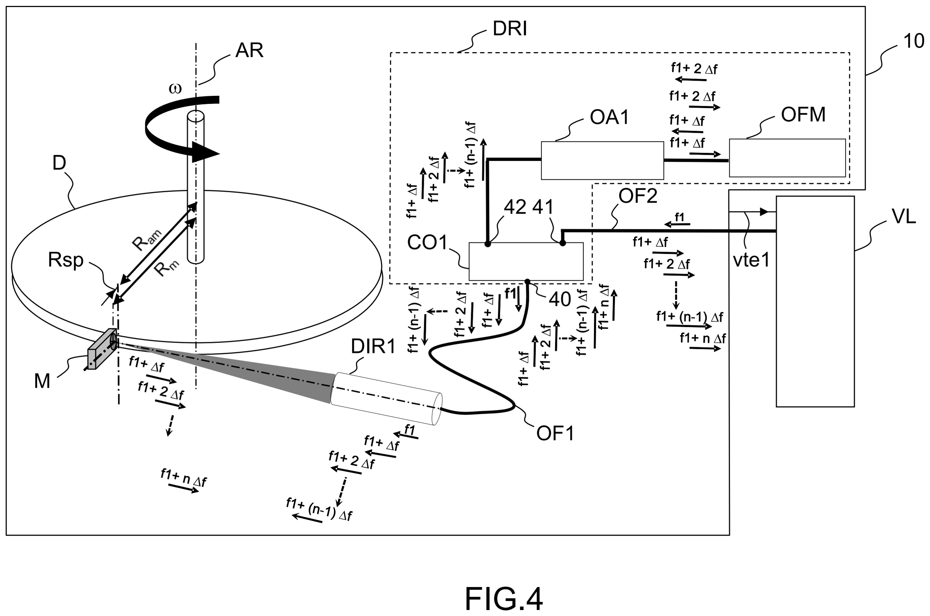

Selon un premier mode de réalisation de la variante multiplicative de vitesse illustré figure 4, reprenant de manière non limitative le mode de réalisation du miroir fixé sur la tranche du disque, le premier dispositif d'illumination/réception DIR1 est fibré, c'est-à-dire qu'il comprend une première fibre optique OF1, et le dispositif de réinjection DIR comprend un premier coupleur CO1, un premier amplificateur optique OA1 et une fibre optique miroir OFM. Préférentiellement il comprend également une deuxième fibre optique OF2 comme décrit précédemment. Le premier coupleur CO1 est typiquement un coupleur 2 (41, 42) x 1 (40) comprenant trois ports entrées/sorties 40, 41, 42. Le port 40 est reliée à DIR1 via la fibre OF1, le port 42 est reliée à l'amplificateur optique OA1 et l'autre port 41 du coupleur 2x1 est connectée à la fibre OF2, via laquelle transitent le signal d'entrée à la fréquence f1 (entrée) et la fraction des signaux réfléchis SRi destinés à la calibration (sortie).

De manière générale les liens entre les différents composants du dispositif d'étalonnage selon l'invention s'opèrent typiquement via des fibres optiques ou en espace libre. De même les composants eux même sont réalisés par des technologies en espace libre.

L'amplification des signaux optiques et la multiplication du décalage Doppler de référence Δf est obtenue par une succession d'allers-retours dans le premier amplificateur OA1 grâce à un miroir fibre OFM. Ce miroir fibre OFM a pour fonction de renvoyer les signaux décalés en fréquence vers la sonde DIR1 afin de cumuler les décalages Doppler.

Les trajets optiques de la première boucle de duplication (ou multiplication) des décalages Doppler sont détaillés ci-après avec un exemple:

- Le faisceau incident initial S1 à la fréquence f1 est récupéré par le port 41 du coupleur CO1, par exemple un 10% (41) /90% (42).

- Le faisceau S1 traverse le coupleur CO1 à deux voies 10/90 %, c'est à dire que 10% de la puissance initiale à la fréquence f1 se retrouve en sortie sur le port 40 puis est injectée dans la sonde optique DIR1.

- Lors de la rotation du disque D, à chaque passage du miroir devant le faisceau incident focalisé par la-DIR1, le faisceau réfléchi par le miroir est pendant un court instant parfaitement perpendiculaire au faisceau incident (auto-collimation). Une grande partie du faisceau incident est donc réfléchi par le miroir et retourne dans la sonde DIR1 avec l'information du premier décalage Doppler (f1+Δf).
Ce décalage Doppler initial Δf correspond à la vitesse tangentielle réelle du disque choisie, et représente la référence de vitesses tangentielle, dite première vitesse tangentielle vte1, qui est dupliquée (multipliée) par la suite.

- le faisceau retour SR1 contenant l'information du décalage Doppler (f1+Δf) repasse dans le coupleur CO1 en sens inverse.

- La première sortie du coupleur 41 à 10% renvoie le signal SR1 décalé de (f1+Δf) vers la sortie du dispositif 10, typiquement via OF2, et est injecté en entrée du vélocimètre VL pour l'étalonnage. Le traitement de ce signal par l'unité de traitement UT de VL, avec le décalage (Δf), procure la première vitesse tangentielle de mesure du disque vtm1 vu par VL. Si le vélocimètre VL est bien calibré on a vtm1 = vte1.

- La seconde sortie du coupleur 42 à 90 % envoie ce même signal décalé de (f1+Δf) vers le premier amplificateur optique OA1 afin d'augmenter la puissance du faisceau et compenser les pertes dues aux différents composants, en particulier les pertes du faisceau retour dans la sonde DIR1.
En sortie de l'amplificateur OA1, une fibre dotée d'un miroir en extrémité OFM renvoie à nouveau le signal amplifié dans l'amplificateur. Cet ensemble, amplificateur OA1 et fibre miroir OFM, est le circuit optique de renvoi du faisceau dans la sonde DIR1 en vue de réaliser la multiplication des décalages Doppler. A ce stade, la fréquence du faisceau est toujours de (f1+Δf).

- Puis le faisceau SR1, décalé de (f1+Δf) repasse dans le coupleur à 90 %.

- Enfin, le faisceau laser décalé SR1, toujours de (f1+Δf), est renvoyé une seconde fois dans la sonde DIR1, devient un faisceau incident S2 sur le miroir, puis se réfléchit à nouveau sur le miroir M animé de sa vitesse tangentielle vte1.

- Le faisceau retour SR2 dans la sonde DIR1 se retrouve donc décalé en fréquence de (f1+2xΔf) et entre à nouveau dans le coupleur CO1.

- La première sortie 41 du coupleur à 10% renvoie le signal décalé de 2x$\Delta$f vers la sortie et le vélocimètre VL. Le traitement de ce signal avec le décalage de 2x$\Delta$f donne 2 fois la vitesse tangentielle initiale vte1 du disque.

- La seconde sortie du coupleur à 90 % renvoie le faisceau (f1+2x$\Delta$f) vers la boucle d'amplification et de retour du faisceau dans la sonde DIR1.

Les aller/retour via le circuit de multiplication sont réalisés typiquement entre 10 et 20 fois. Le nombre d'itérations dépend de la qualité des signaux qui se dégradent au fil des amplifications et du temps d'auto-collimation disponible (dépendant de la sonde et de la vitesse de rotation du disque).

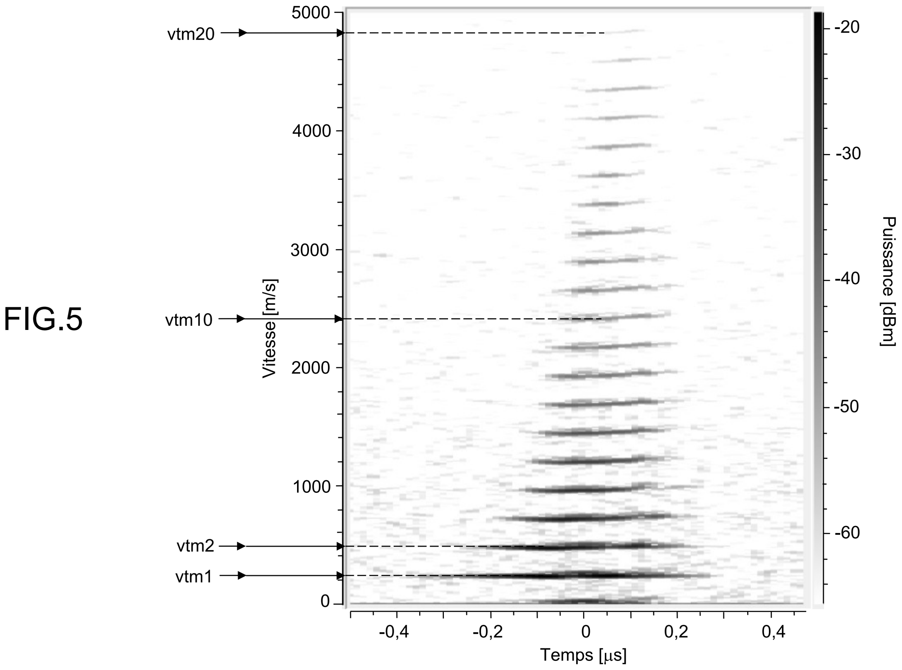

La figure 5 illustre un spectrogramme temps-/vitesse d'un exemple de la multiplication des vitesses selon le premier mode de réalisation (figure 4) de la variante multiplicative de vitesse de l'invention. Les vitesses en ordonnée sont les vitesses vtmi mesurées par un vélocimètre VL (en sortie de l'unité de traitement) couplé au dispositif d'étalonnage générant les différents signaux SRi.

Dans le cas de cet exemple, la première vitesse tangentielle réelle étalon de référence vte1 est de 240 m/s $\pm$0,05 m/s. La vitesse tangentielle de vte1 = 240 m/s est connue avec une grande précision grâce à la connaissance précise du produit $\omega$Rm.

La vitesse obtenue après un passage Pi est notée vtmi. Après 19 passages dans la boucle "multiplicative", correspondant à n=20, la vitesse tangentielle du pseudo-projectile mesurée par le système VL industriel a atteint vtm20 = 4800 m/s = 20x240 m/s. Du fait que l'on sait que vtm1 correspond à vte1 (240 m/s), vtmi correspond à i fois vte1, vtm20 correspond à 20 fois vte1 (soit 4800 m/s), l'échelle de vitesse en m/s peut être calibrée avec précision sur l'ensemble de la plage de vitesse entre 100 et 5000 m/s.

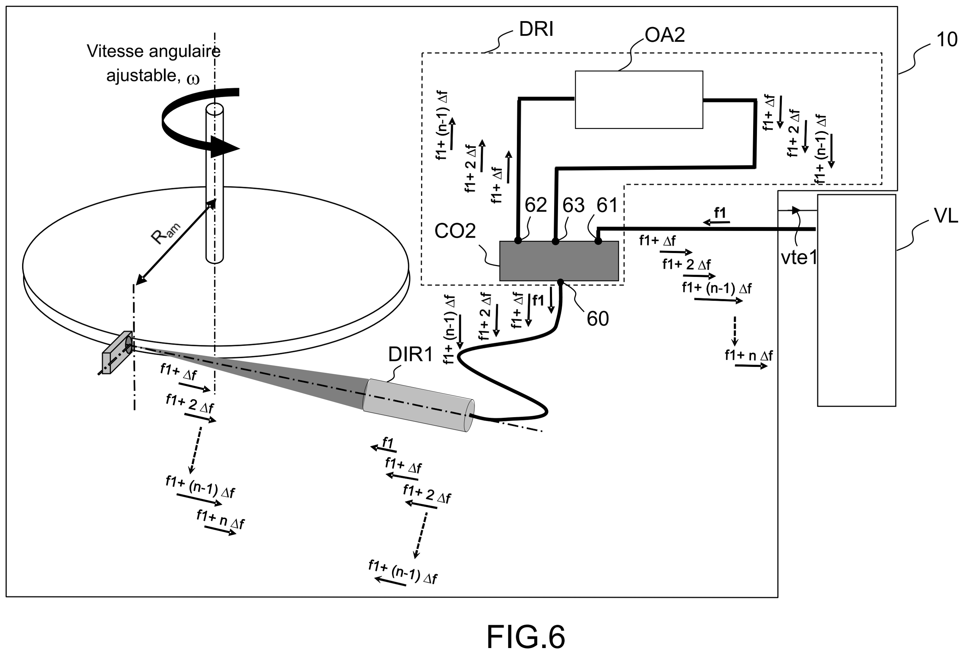

Selon un deuxième mode de réalisation de la variante multiplicative de vitesse illustré figure 6, reprenant de manière non limitative le mode de réalisation du miroir fixé sur la tranche du disque, le premier dispositif d'illumination/réception DIR1 est fibré, c'est-à-dire qu'il comprend une première fibre optique OF1 et le dispositif de réinjection DIR comprend un deuxième coupleur CO2 et un deuxième amplificateur optique OA2 configuré pour reboucler sur le deuxième coupleur CO2.

Dans ce deuxième mode réalisation, l'amplification et la duplication (multiplication) du décalage Doppler de référence $\Delta$f sont réalisées par une boucle fibrée. Cette boucle a pour fonction d'amplifier et de renvoyer les signaux vers la sonde DIR1 afin de cumuler les décalages Doppler.

Dans ce mode de réalisation il n'y plus de miroir fibré de renvoi du faisceau, mais une véritable boucle optique.

Les trajets optiques de la première boucle de duplication (ou multiplication) des décalages Doppler sont les suivants (figure 6) :

- Le faisceau incident initial S1 à la fréquence f1 est récupéré par le port 61 du coupleur CO2, par exemple un coupleur à 4 ports (60, 61, 62, 63) 3x1 par exemple 33% (61) /33% (62) /33% (63).

- Le faisceau traverse le coupleur CO2 à trois voies, par exemple 33/33/33 : 33% de la puissance initiale à la fréquence f1 se retrouve en sortie 60 du coupleur puis est injecté dans la sonde optique DIR1.

- Lors de la rotation du disque, à chaque passage du miroir M devant le faisceau incident focalisé par la sonde DIR1, le faisceau réfléchi par le miroir est pendant un court instant parfaitement perpendiculaire au faisceau incident (auto-collimation) issu de la sonde DIR1. Une grande partie du faisceau incident est donc réfléchi par le miroir et retourne dans la sonde DIR1 avec l'information du premier décalage Doppler (f1+$\Delta$f) relatif à (une fois) la vitesse tangentielle du miroir.

- Après réflexion sur le miroir rotatif M, le faisceau retour SR1 contenant l'information du décalage Doppler (f1+$\Delta$f) repasse dans le coupleur en sens inverse (via 60).

- La première sortie 61 du coupleur à 33% renvoie le signal décalé de (f1+$\Delta$f) vers la sortie du dispositif, destinée à être couplée au vélocimètre VL. Le traitement de ce signal SR1 avec le décalage ($\Delta$f) procure la vitesse tangentielle initiale du disque vtm1 vu par VL. Si les lasers de VL sont bien calibrés on a vtm1 = vte1.

- La seconde sortie 62 du coupleur à 33% envoie ce même signal SR1 décalé de (f1+$\Delta$f) vers un deuxième amplificateur optique OA2 afin d'augmenter la puissance de ce faisceau et compenser les pertes dues aux différents composants, en particulier les pertes du faisceau retour dans la sonde DIR1.

- En sortie d'amplificateur le faisceau est renvoyé sur la 3$^{\text{ème}}$ voie 63 à 33% du coupleur. Ainsi, le faisceau à nouveau amplifié décalé de (f1+$\Delta$f) est renvoyé vers la sonde DIR1.

- Le faisceau issu de la sortie 62 du coupleur, amplifié et renvoyé sur la sortie 63 du coupleur représente la boucle pour réaliser la multiplication des décalages Doppler. A ce stade la fréquence du faisceau est toujours de (f1+$\Delta$f),

- Enfin, le faisceau laser décalé, toujours de (f1+$\Delta$f), est renvoyé une seconde fois dans la sondeDIR1, devient le faisceau incident S2 puis se réfléchi à nouveau sur le miroir animé de sa vitesse tangentielle vte1.

- Le faisceau retour SR2 dans la sonde DIR1 se retrouve donc décalé en fréquence de (f1+2x∆f) et entre à nouveau dans le coupleur via la voie 60.

- La première sortie du coupleur 61 à 33% renvoie le signal décalé de 2x∆f vers la sortie et le vélocimètre VL. Le traitement de ce signal avec le décalage de 2x∆f donne une vitesse mesurée vtm2 correspondant à 2 fois la vitesse tangentielle initiale du disque vte2=2.vte1 si VL est bien calibré.

- La seconde sortie du coupleur à 33 % 62 renvoie le faisceau (f1+2x∆f) vers la boucle d'amplification. Le retour du faisceau dans la sonde DIR1 est réalisé via le passage dans le coupleur de 63 vers 60.

Les aller/retour via le circuit de multiplication sont réalisés entre 10 et 20 fois. Le nombre d'itérations dépend de la qualité des signaux qui se dégradent au fil des amplifications et du temps disponible d'auto-collimation.

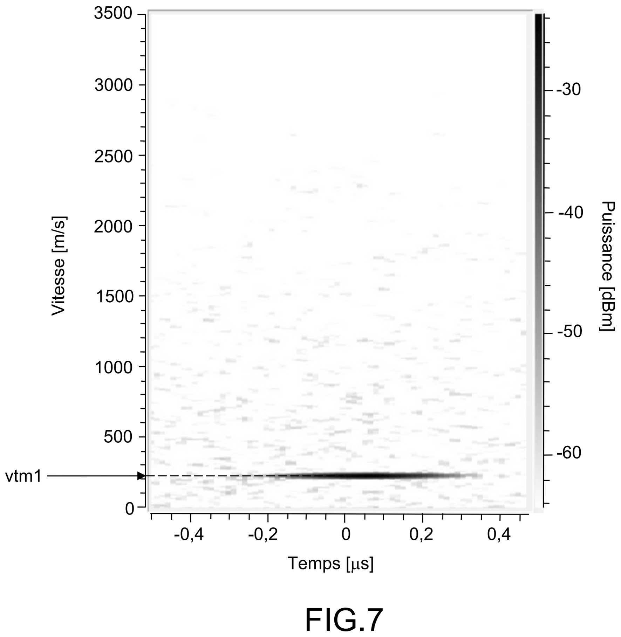

Les figures 7, 8 et 9 illustrent un spectrogramme temps/vitesse d'un exemple de la multiplication des vitesses selon le deuxième mode de réalisation (figure 6) de la variante multiplicative de vitesse de l'invention pour 3 cas différents.

De même que pour la figure 5 les vitesses en ordonnée sont les vitesses vtmi mesurées par un vélocimètre VL couplé au dispositif d'étalonnage générant les différents signaux SRi.

Le spectrogramme de la figure 7 présente la vitesse obtenue sans boucle. Il s'agit donc de la mesure vtm1 de la vitesse tangentielle initiale du miroir en rotation, que l'on sait égale à la valeur étalon de vte1 de 240 m/s, correspondant au décalage Doppler initial ∆f.

Le spectrogramme de la figure 8, présente les vitesses obtenues avec la boucle, mais sans l'amplificateur OA2. Sans amplificateur, les différentes pertes de puissance dans le circuit optique permettent tout de même de réaliser 3 fois la boucle et de multiplier par 4 le décalage Doppler initial 4 x ∆f et d'atteindre une vitesse tangentielle de 960 m/s.

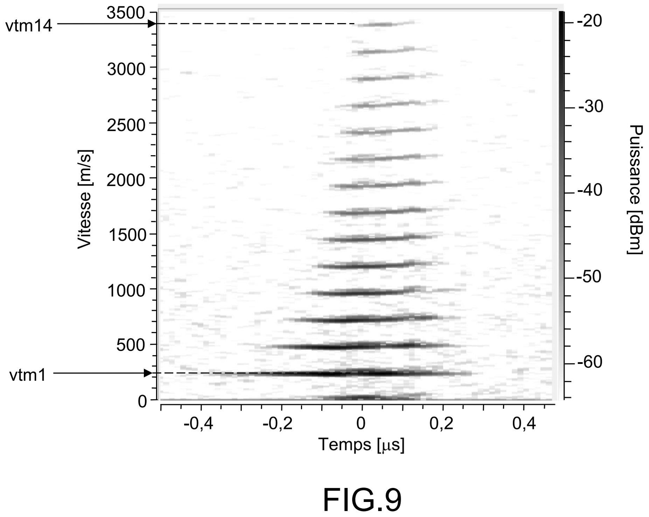

Le spectrogramme de la figure 9 présente les vitesses obtenues avec la boucle et l'amplificateur en fonctionnement. Avec l'amplificateur, les différentes pertes de puissance dans le circuit optique sont réduites et permettent de réaliser 13 fois la boucle, et pour cet exemple, de multiplier par 14 le décalage Doppler initial 14 x ∆f et d'atteindre une vitesse tangentielle de 3360 m/s.

Du fait que l'on sait que vtm1 correspond à vte1 (240m/s), vtmi correspond à i fois vte1, vtm14 correspond à 14 fois vte1 (soit 3360 m/s), l'échelle de vitesse en m/s peut être calibrée avec précision sur l'ensemble de la plage de vitesse entre 100 m/s et 3500 m/s.

Pour la mise en œuvre de l'étalonnage, le dispositif d'étalonnage 10 est couplé à un vélocimètre dont il récupère le signal à la fréquence f1. Le dispositif 10 a en mémoire la valeur de Rm. On met alors en rotation le disque à une première vitesse tangentielle à mesurer vte1 (consigne). Pour cela il convient de mesurer précisément la vitesse angulaire du disque au moment de l'étalonnage.

On vise alors avec DIR1 le miroir en rotation et le dispositif d'étalonnage renvoi le signal réfléchi utile au vélocimètre, qui le traite et extrait les mesures de vitesses.

A partie de la valeur étalon vte1 fournie par le dispositif 10, le vélocimètre calcule les multiples i.vte1. On peut calibrer l'échelle de mesure en m/s de VL avec précision grâce à la connaissance de vte1 et de tous les multiples de vitesses accessibles par la mesure temps/-fréquence. Le nombre de multiple pour lesquels la comparaison peut être effectuée, nécessairement inférieure ou égale à n, est limité par la sensibilité du vélocimètre pour enregistrer des faibles signaux et par la zone d'éclairement du miroir par autocollimation (celle-ci diminue avec le nombre de saut de vitesse).

Selon une variante illustrée figure 10 le dispositif d'étalonnage selon l'invention est également configuré pour générer des transitions de vitesse périodiques et rapides (typiquement inférieur à 20 ns) entre la vitesse de l'objet mobile disque) et une référence fixe à vitesse nulle. Pour cela le disque comprend des motifs MT traversant disposés régulièrement en périphérie du disque sur un rayon déterminé Rmot. Le dispositif d'étalonnage 10 comprend en outre un deuxième dispositif d'illumination/réception DIR2 configuré pour recevoir un deuxième signal lumineux S2' à une deuxième fréquence f2, le deuxième signal lumineux étant issu du vélocimètre laser. La fréquence f2 peut être identique ou différente de f1. Le dispositif d'illumination/réception DIR2, ou deuxième sonde, est également configuré pour orienter et focaliser le deuxième signal lumineux de manière à former un deuxième signal incident éclairant, avec un angle d'incidence α, non nul par rapport au plan du disque, soit les motifs traversant MT soit la surface du disque, en fonction de la position du disque lors de la rotation. Ainsi périodiquement le faisceau incident est intercepté par la surface supérieure du disque ou bien traverse au travers des motifs. Le dispositif DIR2 est enfin configuré pour récupérer un deuxième signal SR2' rétrodiffusé par le disque D, présentant une alternance entre un deuxième signal d'amplitude non nulle issu de la rétrodiffusion de la surface du disque, et un deuxième signal d'amplitude nulle lorsque le deuxième signal incident traverse le disque au travers d'un motif.

Le dispositif d'étalonnage 10 est en outre configuré pour fournir au vélocimètre laser VL au moins une fraction du deuxième signal rétrodiffusé SR2'.

Pour l'étalonnage le vélocimètre traite la fraction de deuxième signal rétrodiffusé et génère ainsi signal périodique de vitesse, entre une vitesse non nulle et une vitesse nulle.

Cette visée avec la deuxième sonde génère ainsi des transitions étalons entre la vitesse tangentielle du disque (mesure de la diffusion du faisceau incident à la surface du disque) et une vitesse nulle lorsque le faisceau traverse l'un des perçages du disque. En d'autres termes un générateur étalon de transitions de vitesse est réalisé. Le temps de transition maîtrisé (typiquement > 20 ns) dépend du diamètre du faisceau focalisé (par exemple de l'ordre de 10 $\mu$m) et de la vitesse tangentielle maximale du disque(vtemax).

Ce générateur de transition étalon de vitesses réalisé avec le deuxième dispositif d'illumination/réception DIR2 du dispositif d'étalonnage 10 selon l'invention permet de qualifier la réponse percussionnelle de l'ensemble de la chaîne d'acquisitions du vélocimètre (réception, numérisation et traitement des signaux pour extraction des vitesses) à des sollicitations sous la forme d'impulsions de vitesses temporellement courtes et calibrées.

A noter que, du fait que l'angle $\alpha$ entre la direction de la vitesse mesurée vm par la deuxième sonde et la direction réelle de la vitesse tangentielle vtm du disque, la relation à appliquer est : vm = vtm.cos($\alpha$).

Pour la deuxième sonde, la vitesse mesurée est donc toujours inférieure à la vitesse tangentielle réelle. L'incertitude sur l'angle $\alpha$ n'a pas d'importance puisque ici c'est la connaissance du front des transitions de vitesse qui est recherchée.

Selon une autre variante, qui peut être combinée aux variantes précédentes, et également illustrée figure 10, le dispositif d'étalonnage 10 selon l'invention est également destiné à être couplé à un télémètre laser TL, afin de permettre à celui-ci de s'étalonner en distance. Pour cela le disque comprend, comme pour la variante précédente, des motifs MT traversant disposés régulièrement en périphérie du disque sur un rayon déterminé Rmot. Le dispositif d'étalonnage 10 comprend en outre un objet rétrodiffusant Obj disposé sous le disque à une distance déterminée do du disque et de manière à rétrodiffuser une lumière ayant traversé les motifs. Le dispositif d'étalonnage 10 comprend également un troisième dispositif d'illumination/réception DIR3 ou troisième sonde, configuré pour :

    recevoir un troisième signal lumineux S3' à une troisième fréquence f3, le troisième signal lumineux étant issu du télémètre laser TL,

    orienter et focaliser le troisième signal lumineux de manière à former un troisième signal incident éclairant, selon un axe d'incidence N normal à la surface du disque, soit les motifs traversant soit la surface du disque en fonction de la position du disque lors de la rotation,

    récupérer un troisième signal rétrodiffusé SR3' présentant une alternance entre un troisième signal rétrodiffusé par le disque et un troisième signal rétrodiffusé par l'objet.

Le dispositif d'étalonnage est en outre configuré pour fournir au télémètre laser TL au moins une fraction du troisième signal rétrodiffusé. Le signal rétrodiffusé génère donc des transitions rapides périodiques (de l'ordre de la dizaine de ns) entre deux distances (visée sur la surface du disque et visée sur l'objet lorsque le faisceau incident de mesure traverse les motifs du disque). Ces transitions calibrées rapides entre deux distances permettent de qualifier la réponse du télémètre. On a ainsi réalisé un étalonnage dynamique de distance sans contact. A noter que la distance do doit être connu avec précision pour la calibration du télémètre, et la distance sonde disque est préférentiellement connue pour faciliter le réglage du diagnostic

Selon un mode de réalisation de cette variante l'objet est configuré pour être positionné à une pluralité de distances déterminées le long dudit axe d'incidence N du troisième signal incident, pour obtenir plusieurs étalons de distance (par exemple on peut faire varier la distance do entre 1 et 100 mm).

Selon un mode de réalisation compatible avec toutes les variantes précitées et également illustré figure 8, le disque rotatif est disposé dans une enceinte de confinement EV sous vide primaire ou secondaire pour que le disque puisse tourner sans frottement avec une motorisation adaptée. L'enceinte est préférentiellement blindée pour protéger l'utilisateur vis à vis du risque d'éclatement du disque rotatif.

Les sondes DIR1, et DIR2 et/ou DIR3 le cas échéant, peuvent être placées dans l'enceinte (sonde interne) ou à l'extérieur (sonde externe). Dans ce dernier cas il convient d'insérer un hublot H pour permettre au faisceau incident (se propageant en espace libre) d'arriver sur le disque (voir par exemple DIR3 sur la figure 8).

Le vélocimètre, et le cas échéant le télémètre, sont placés à l'extérieur de l'enceinte.

Selon un mode de réalisation illustré figures 2 et 8 le dispositif d'étalonnage selon l'invention comprend en outre une masse d'équilibrage ME disposée sur le disque et destinée à équilibrer la masse du miroir fixé sur le disque.

Selon un mode de réalisation le dispositif d'étalonnage selon l'invention est configuré de sorte que la première vitesse tangentielle étalon maximale atteinte par le disque vte1max soit supérieure ou égale à 100 m.s$^{-1}$. Il est alors possible de réaliser avec le dispositif selon l'invention un étalonnage de vitesse sur une large plage de vitesses : entre 1 et 100 m/s en utilisant le dispositif dans sa version sans réinjection, puis jusqu'à 2000 m/s voir 5000 m/s en utilisant la version avec réinjection, permettant d'accéder à des multiples de l'ordre de 20 de vte1.

L'obtention d'une vitesse tangentielle de 100 m/s et plus nécessite une optimisation du disque rotatif selon plusieurs aspects. Avec une telle optimisation les inventeurs ont simulé des disques rotatifs pouvant atteindre 700 à 800 m/s.

Placer le disque dans une enceinte à vide est une première option.

Une deuxième option est d'optimiser la forme du disque.

Après différentes études, les inventeurs ont établis qu'un disque tel qu'illustré figure 9, présentant une épaisseur évolutive, plus épaisse au centre qu'au bord, permet d'améliorer la tenue mécanique au centre du disque où les contraintes sont maximales. En d'autres termes selon un mode de réalisation le disque D présente, au moins en périphérie, une épaisseur $e(r)$ diminuant avec une distance $r$ à l'axe de rotation.

Afin d'accroître la tenue mécanique au centre du disque, et accroître ainsi sensiblement la vitesse de rotation du disque avant son endommagement, selon un mode de réalisation le disque est bi-matériaux, fait avec un premier matériau Mat1 pour la partie centrale du disque et un deuxième matériau Mat2 pour la partie périphérique.

Selon un mode de réalisation les motifs traversant sont des créneaux CR localisés en périphérie du disque. Des motifs usinés en bord de disque se présentant sous la forme de créneaux permettent d'obtenir des transitions des vitesses et des distances plus franches.

Selon un mode de réalisation le disque comprend un épaulement EP localisé à la périphérie du disque. Préférentiellement son diamètre externe définit le diamètre du disque Dd (rayon Rd). Cet épaulement a pour objectif de localiser avec précision la distance entre l'axe de rotation et le diamètre externe de l'épaulement. Préférentiellement le faisceau incident focalisé est tangent au bord de l'épaulement du rayon $R_d$. La connaissance du diamètre du faisceau focalisé (Dsp = 2.Rsp) permet de déterminer avec précision le rayon réel de mesure :

$$R_m = R_d + R_{sp}).$$

De plus, l'épaulement possède également une fonction de raidisseur et améliore la tenue mécanique de la partie externe du disque.

Préférentiellement le bord du miroir est fixé à l'épaulement et le miroir est perpendiculaire au diamètre externe de l'épaulement.

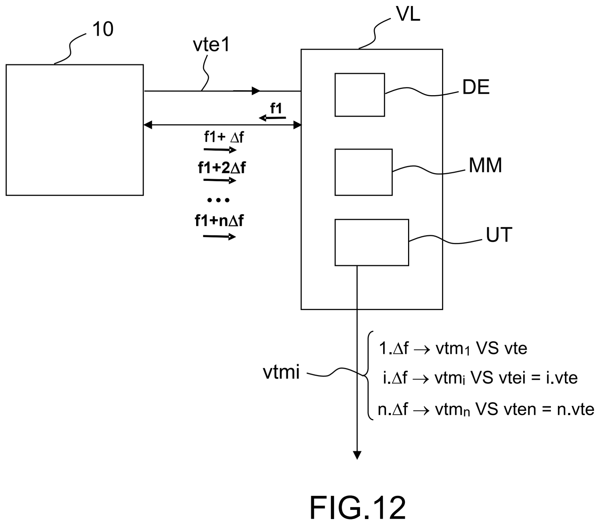

Selon un deuxième aspect l'invention concerne un système de mesure de vitesse étalonné 20 illustré figure 12. Le système 20 comprend un vélocimètre laser VL et un dispositif d'étalonnage selon le premier aspect de l'invention.

Le vélocimètre VL comprend de manière connue :

- un dispositif d'émission/réception DER configuré pour émettre un signal lumineux à la première fréquence f1 et pour recevoir un signal réfléchi par une cible décalé en fréquence,

- un module de mesure MM configuré pour superposer un signal référence et le signal réfléchi par la cible et détecter un signal de battement à une fréquence de battement correspondant au décalage en fréquence,

- une unité de traitement UT configurée pour numériser le signal de battement et extraire de la fréquence de battement une information de vitesse.

Le vélocimètre laser VL du système 20 est configuré pour être couplé au dispositif d'étalonnage 10 lors de l'étalonnage.

Lors de l'étalonnage, le vélocimètre VL est configuré pour recevoir, du dispositif d'étalonnage 10, la valeur de la première vitesse tangentielle étalon vte1.

Le dispositif d'émission/réception DER est en outre configuré pour émettre ledit le premier signal lumineux à ladite première fréquence f1 vers le dispositif d'étalonnage 10.

Le dispositif DER est également configuré pour recevoir du dispositif d'étalonnage 10 i) la fraction du premier signal réfléchi présentant une fréquence décalée de la première fréquence d'un décalage Doppler $\Delta f$ correspondant à ladite première vitesse tangentielle étalon, et ii) la fraction de la pluralité de signaux réfléchis additionnels présentant respectivement une fréquence décalée de la première fréquence d'une pluralité de décalages égaux à i fois le décalage Doppler ($\Delta f$), i variant de 2 à n.

Lors de l'étalonnage, le premier signal réfléchi et la pluralité de signaux réfléchis additionnels, issus du dispositif d'étalonnage 10 et reçus par le dispositif d'émission réception DER, sont traités de la même manière que le signal réfléchi par la cible par l'unité de traitement UT du vélocimètre VL.

L'unité de traitement UT du vélocimètre VL est ainsi en outre configurée pour extraire alors du décalage Doppler $\Delta f$ une première vitesse tangentielle de mesure vtm1, à comparer avec la première vitesse tangentielle étalon vte1 reçue du dispositif d'étalonnage, et pour extraire, de la pluralité de décalages égaux à i fois le décalage Doppler $\Delta f$, une pluralité de vitesse de mesure tangentielles additionnelles associées vtmi, à comparer respectivement à une pluralité de vitesses tangentielles étalon additionnelles vtei respectivement égales à i fois la première vitesse tangentielle étalon vte1.

**Revendications**

1. Dispositif d'étalonnage (10) destiné à être couplé à un vélocimètre laser (VL) comprenant:

   • un disque (D) configuré pour tourner autour d'un axe de rotation (AR) à une vitesse angulaire (ω) déterminée,

• un miroir (M) solidaire du disque, présentant une surface (SM),

• un premier dispositif d'illumination/réception (DIR1) configuré pour :

    • recevoir un premier signal lumineux (S1) à une première fréquence, ledit premier signal lumineux étant issu du vélocimètre laser,

    • orienter et focaliser le premier signal lumineux de manière à former un premier signal incident éclairant la surface du miroir à une incidence normale pour une position du disque lors d'un passage du disque, et selon un diamètre sur ladite surface déterminé, le centre dudit diamètre étant localisé à une distance de mesure (Rm) déterminée dudit axe de rotation (AR),

    • récupérer un premier signal réfléchi (SR1) par le miroir à une fréquence décalée par rapport à la première fréquence d'un décalage Doppler (Δf),

ledit dispositif d'étalonnage étant en outre configuré pour fournir en sortie, au moins une fraction dudit premier signal réfléchi et une valeur d'une première vitesse tangentielle étalon (vte1) déterminée à partir de ladite vitesse angulaire (ω) et dudit rayon de mesure (Rm), destinées audit vélocimètre laser (VL) à étalonner.

2. Dispositif d'étalonnage selon la revendication précédente comprenant en outre un dispositif de réinjection (DRI) configuré pour récupérer, amplifier et réinjecter, dans le premier dispositif d'illumination/-réception, le premier signal réfléchi et une pluralité de signaux réfléchis additionnels formés par des réflexions successives sur ledit miroir lors dudit passage du disque,

ledit dispositif d'étalonnage étant en outre configuré pour fournir en sortie une fraction de ladite pluralité de signaux réfléchis additionnels, destinés audit vélocimètre laser (VL) à étalonner.

3. Dispositif d'étalonnage selon la revendication précédente dans lequel le premier dispositif d'illumination/réception est fibré et dans lequel le dispositif de réinjection comprend un premier coupleur (CO1), un premier amplificateur optique (OA1) et une fibre optique miroir (OFM).

4. Dispositif d'étalonnage selon la revendication 2 dans lequel le premier dispositif d'illumination/réception est fibré et dans lequel le dispositif de réinjection comprend un deuxième coupleur (CO2) et un deuxième amplificateur optique (OA2) configuré pour reboucler sur le deuxième coupleur (CO2).

5. Dispositif d'étalonnage selon l'une des revendications précédentes dans lequel le disque comprend des motifs (MT) traversant disposés régulièrement en périphérie du disque sur un rayon déterminé (Rmot), le dispositif d'étalonnage comprenant en outre un deuxième dispositif d'illumination/réception (DIR2) configuré pour :

    • recevoir un deuxième signal lumineux (S2') à une deuxième fréquence, ledit deuxième signal lumineux étant issu du vélocimètre laser,

    • orienter et focaliser le deuxième signal lumineux de manière à former un deuxième signal incident éclairant, avec un angle d'incidence (α) non nul par rapport au plan du disque, soit les motifs soit la surface du disque en fonction de la position du disque lors de la rotation,

    • récupérer un deuxième signal rétrodiffusé (SR2) par le disque, présentant une alternance entre un deuxième signal d'amplitude non nulle issu de la rétrodiffusion de la surface du disque, et un deuxième signal d'amplitude nulle lorsque le deuxième signal incident traverse le disque au travers d'un motif,

ledit dispositif d'étalonnage étant en outre configuré pour fournir audit vélocimètre laser (VL), au moins une fraction dudit deuxième signal rétrodiffusé.

6. Dispositif d'étalonnage selon l'une des revendications précédentes et destiné à être en outre couplé à un télémètre laser (TL), dans lequel le disque comprend des motifs (MT) traversant disposés régulièrement en périphérie du disque sur un rayon déterminé (Rmot), le dispositif d'étalonnage comprenant en outre :

    • un objet rétrodiffusant (Obj) disposé sous le disque à une distance (do) déterminée du disque et de manière à rétrodiffuser une lumière ayant traversé les motifs,

    • un troisième dispositif d'illumination/réception (DIR3) configuré pour :

        o recevoir un troisième signal lumineux (S3') à une troisième fréquence, ledit troisième signal lumineux étant issu du télémètre laser (TL),

        o orienter et focaliser le troisième signal lumineux de manière à former un troisième signal incident éclairant, selon un axe d'incidence (N) normal à la surface du disque, soit les motifs traversant soit la surface du disque en fonction de la position du disque lors de la rotation,

        o récupérer un troisième signal rétrodiffusé

(SR3') présentant une alternance entre un troisième signal rétrodiffusé par le disque et un troisième signal rétrodiffusé par l'objet,

ledit dispositif d'étalonnage étant en outre configuré pour fournir audit télémètre laser (TL), au moins une fraction dudit troisième signal rétrodiffusé.

7. Dispositif d'étalonnage selon la revendication précédente dans lequel l'objet est configuré pour être positionné à une pluralité de distances déterminées le long dudit axe d'incidence (N) du troisième signal incident.

8. Dispositif d'étalonnage selon l'une des revendications précédentes comprenant en outre une masse d'équilibrage (ME) disposée sur le disque et destinée à équilibrer une masse du miroir.

9. Dispositif d'étalonnage selon l'une des revendications précédentes dans lequel le disque présente, au moins en périphérie, une épaisseur (e) diminuant avec une distance (r) à l'axe de rotation.

10. Dispositif d'étalonnage selon l'une des revendications précédentes dans lequel les motifs traversant sont des créneaux (CR) localisés en périphérie du disque

11. Dispositif d'étalonnage selon l'une des revendications précédentes dans lequel le disque est bi-matériaux, avec un premier matériau pour une partie centrale du disque et un deuxième matériau pour une partie périphérique.

12. Dispositif d'étalonnage selon l'une des revendications précédentes configuré de sorte qu'une première vitesse tangentielle étalon maximale atteinte par le disque (vte1max) soit supérieure ou égale à 100 m.s$^{-1}$.

13. Système de mesure de vitesse étalonné (20) comprenant un vélocimètre laser (VL) et un dispositif d'étalonnage selon l'une des revendications 1 à 12, le vélocimètre laser étant configuré pour être couplé audit dispositif d'étalonnage lors de l'étalonnage, le vélocimètre laser comprenant :

• un dispositif d'émission/réception (DER) configuré pour émettre le premier signal lumineux à ladite première fréquence (f1) et pour recevoir un signal réfléchi par une cible décalé en fréquence,
• un module de mesure (MM) configuré pour superposer un signal référence et ledit signal réfléchi par la cible, et détecter un signal de battement à une fréquence de battement correspondant au décalage en fréquence,

• une unité de traitement configurée pour numériser le signal de battement et extraire de la fréquence de battement une information de vitesse,

le vélocimètre laser (VL) étant en outre configuré, lors de l'étalonnage, pour recevoir ladite valeur d'une première vitesse tangentielle étalon (vte1) délivrée par le dispositif d'étalonnage (10) et de sorte que :

• le dispositif d'émission/réception émette ledit le premier signal lumineux à ladite première fréquence (f1) vers le dispositif d'étalonnage,
• le dispositif d'émission/réception reçoive, du dispositif d'étalonnage, la fraction dudit premier signal réfléchi présentant une fréquence décalée de la première fréquence d'un décalage Doppler (Δf) correspondant à ladite première vitesse tangentielle étalon, et
la fraction de la pluralité de signaux réfléchis additionnels présentant respectivement une fréquence décalée de la première fréquence d'une pluralité de décalages égaux à i fois le décalage Doppler (Δf), i variant de 2 à n,
• l'unité de traitement extraie dudit décalage Doppler une première vitesse tangentielle de mesure (vtm1) à comparer avec la première vitesse tangentielle étalon (vte1), et extraie, de ladite pluralité de décalages égaux à i fois le décalage Doppler (Δf), une pluralité de vitesse de mesure tangentielles additionnelles associées (vtmi), à comparer respectivement à une pluralité de vitesses tangentielles étalon additionnelles (vtei) respectivement égales à i fois la première vitesse tangentielle étalon (vte1).

FIG.1

FIG.2

EP 4 729 949 A1

**FIG.3**

EP 4 729 949 A1

FIG.4

FIG.5

FIG.6

FIG.7

EP 4 729 949 A1

FIG.8

FIG.9

FIG.10

EP 4 729 949 A1

FIG.11

EP 4 729 949 A1

10

vte1

VL

f1

f1+ $\Delta$f

f1+2$\Delta$f

•••

f1+n$\Delta$f

DE

MM

UT

vtmi

1.$\Delta$f $\rightarrow$ $vtm_1$ VS vte

i.$\Delta$f $\rightarrow$ $vtm_i$ VS $vtei = i.vte$

n.$\Delta$f $\rightarrow$ $vtm_n$ VS $vten = n.vte$

FIG.12

**RAPPORT DE RECHERCHE EUROPEENNE**

Europäisches Patentamt
European Patent Office
Office européen des brevets

Numéro de la demande

EP 25 20 9061

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CN 213 023 203 U (XIAN INST OPTICS & PREC MECHANICS CAS) 20 avril 2021 (2021-04-20) | 1,8,9, 11-13 | INV. G01P3/68 |
| A | * le document en entier * ----- | 2-7,10 | G01P21/02 G01S7/481 |
| X | CN 114 280 563 A (AEROSPACE NEW METEOROLOGICAL SCIENCE AND TECH LIMITED COMPANY ET AL.) 5 avril 2022 (2022-04-05) | 1,8,9, 11-13 | G01S7/497 G01S17/58 |
| A | * page 4, alinéa 4 - page 6, alinéa 30 * * page 7, alinéa 53 - page 10, alinéa 96; figures 1-3, 7 * ----- | 2-7,10 | |
| A | US 4 600 301 A (SNYDER PHILIP K [US]) 15 juillet 1986 (1986-07-15) * le document en entier * ----- | 1-13 | |
| A | CN 111 141 931 A (UNIV NORTH CHINA) 12 mai 2020 (2020-05-12) * le document en entier * ----- | 1-13 | |

**DOMAINES TECHNIQUES RECHERCHES (IPC)**

G01P
G01S
G01D

Le présent rapport a été établi pour toutes les revendications

| Lieu de la recherche | Date d'achèvement de la recherche | Examinateur |
|---|---|---|
| Munich | 10 février 2026 | Springer, Oliver |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
....................................................................................
& : membre de la même famille, document correspondant

EPO FORM 1503 03.82 (P04C02)

**EP 4 729 949 A1**

## ANNEXE AU RAPPORT DE RECHERCHE EUROPEENNE
## RELATIF A LA DEMANDE DE BREVET EUROPEEN NO.

EP 25 20 9061

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-02-2026

| Document brevet cité au rapport de recherche | Date de publication | Membre(s) de la famille de brevet(s) | Date de publication |
|---|---|---|---|
| CN 213023203 U | 20-04-2021 | AUCUN | |
| CN 114280563 A | 05-04-2022 | AUCUN | |
| US 4600301 A | 15-07-1986 | AUCUN | |
| CN 111141931 A | 12-05-2020 | AUCUN | |

EPO FORM P0460